# EUROPEAN PATENT SPECIFICATION

(11) **EP 3 679 256 B1**
(45) Date of publication and mention of the grant of the patent: **10.05.2023**
(21) Application number: 18762398.8
(22) Date of filing: 30.08.2018
(51) Int. Cl.: F16B 12/20, A47B 91/02, A47B 91/00

(54) **USE OF A TOOL GUIDING DEVICE IN THE ASSEMBLY AND ADJUSTMENT PHASE OF FURNITURE OR FURNISHING ITEMS**
VERWENDUNG EINER WERKZEUGFÜHRUNGSVORRICHTUNG IN DER MONTAGE- UND JUSTIERPHASE VON MÖBELN ODER EINRICHTUNGSGEGENSTÄNDEN
UTILISATION D'UN DISPOSITIF DE GUIDAGE D'OUTIL LORS DE LA PHASE DE MONTAGE ET DE RÉGLAGE DE MEUBLES OU D'ARTICLES D'AMEUBLEMENT

(30) Priority: 08.09.2017 IT 201700100741
(43) Date of publication of application: 15.07.2020
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Franco Martegani S.r.l.
(86) International application number: PCT/IB2018/056624
(87) International publication number: WO 2019/048995

(56) References cited:
- EP-A1- 2 653 068
- EP-A1- 3 138 445
- EP-A2- 1 595 627
- AU-A1- 2009 227 484
- DE-U1-202007 015 134

## Description

The present invention relates to the use of a tool guiding device in the assembly and adjustment phase of furniture or furnishing items.

In the field of furniture or furnishing items in general, there are difficulties in the assembly phase for actuating the joining systems between end portions of vertical walls and the bottom, and leveling systems in which there is a reduced encumbrance between the bottom or base and the floor. This problem is particularly felt due to the fact that in a piece of furniture, these systems are provided in both the most accessible front part of the piece of furniture and above all in the less accessible rear part of the piece of furniture.

In order to have valid aid in this task, various solutions have been developed which, however, are not always welcome to users. Such solutions are disclosed for example in EP 3 138 445 A1.

In spite of these known solutions, in fact, basically two problems remain:
- difficulty for the person who has to effect the assembly of the piece of furniture in identifying the manoeuvring point of the front junction, the manoeuvring point of the rear junction, the manoeuvring point of the front leveler and the maneuvering point of the rear leveler;
- difficulty in effecting the tightening of the junctions and actuation of the levelers when the space between the bottom and the floor is reduced, especially in view of the fact that new requirements and aesthetical solutions make this space increasingly smaller.

The general objective of the present invention is to identify an aid for solving the problems of the known art indicated above in a simple, economical and functional manner.

A further objective of the present invention is to use a device that allows secure access from the front or front side of the furniture or similar furnishing item towards the group on which it is necessary to intervene without the assembler having to see said group.

Another objective of the present invention is to have secure access from the front or front side of the furniture or similar furnishing item towards a front or rear joining group and/or a front or rear leveling group.

The above objectives are achieved by the use of a tool guiding device during the assembly and adjustment phase of furniture or furnishing items produced according to independent claim 1 and the following subclaims.

The structural and functional characteristics of the present invention and its advantages with respect to the known art will appear even more evident from the following description, referring to the enclosed schematic drawings, which show an embodiment example of the invention itself. In the drawings:
- figure 1 is a perspective view of the use of a tool guiding device in the assembly and adjustment phase of furniture or furnishing items according to the present invention;
- figure 2 is a perspective view of the tool guiding device used in the assembly and adjustment phase of furniture or furnishing items when exploded with respect to a piece of furniture or furnishing item on which it is necessary to operate using the above-mentioned device;
- figures 3 and 4 are a perspective view and a raised side section which show how a device is used in two different positions for actuating different assembly and adjustment operating groups;

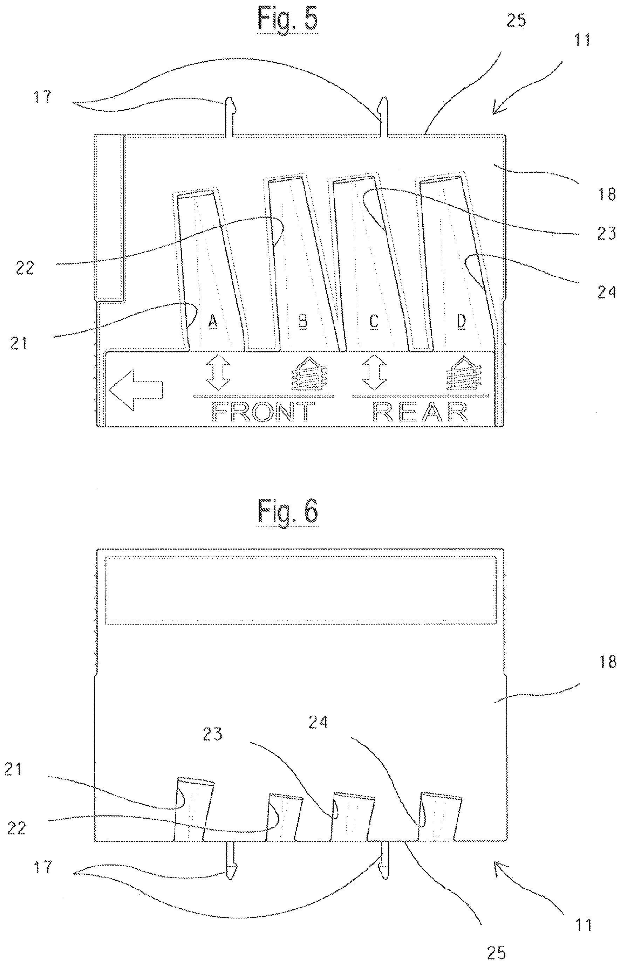

- figure 5 is a plan view from above of the device;
- figure 6 is a plan view from below of the device;

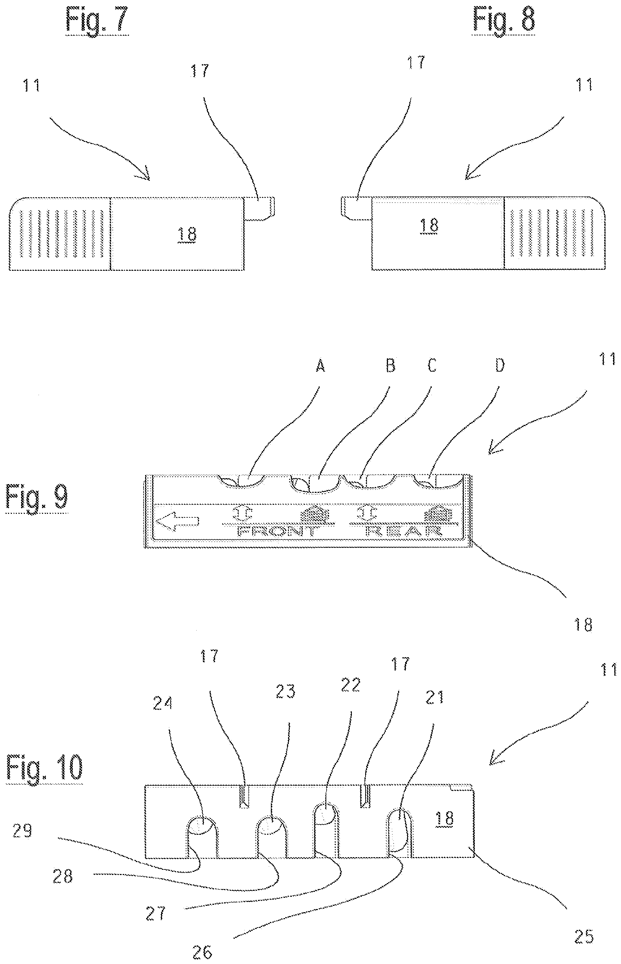

- figures 7 and 8 are views from the two sides of the device;
- figures 9 and 10 are a front view and a rear view of the device shown in the previous figures;
- figure 11 is a plan view from above showing a piece of furniture comprising a side shoulder, a central shoulder and a base between these, in addition to part of a second base adjacent to the central shoulder in which tool guiding devices and relative transmission rods are provided.

With reference to the figures, these show a tool guiding device to be used in the assembly and adjustment phase of furniture or furnishing items, indicated as a whole with 11. The device is suitable for being used in the assembly and adjustment phase of furniture or furnishing items that provide at least one shoulder and at least one bottom.

When used, the device 11, in fact, is positioned between at least one shoulder 12 or vertical wall and a bottom 13 or a final horizontal shelf of a piece of furniture or furnishing item M.

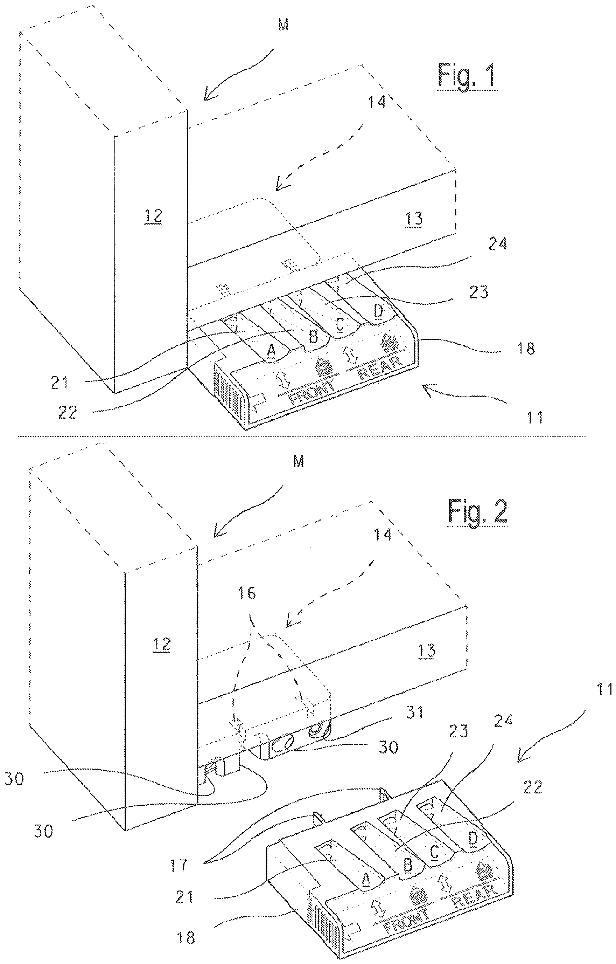

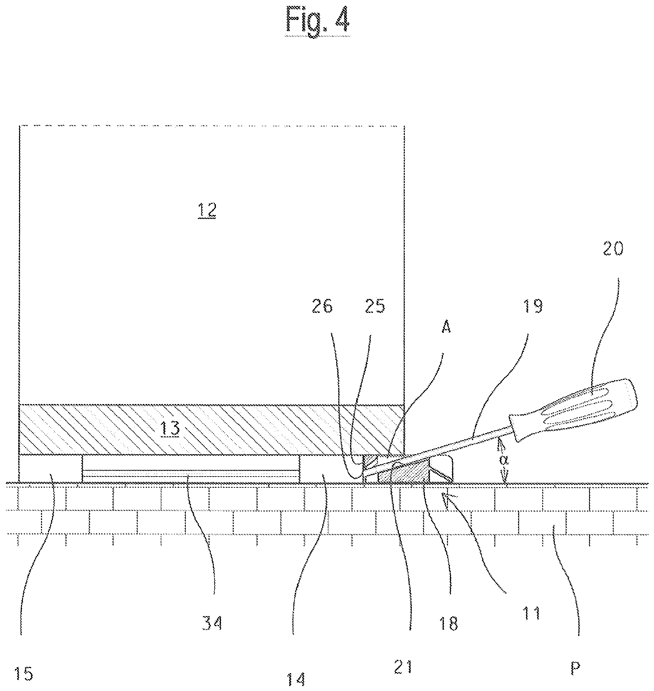

Figures 2 and 4 show by way of non-limiting example, how one or more front bodies 14 and rear bodies 15 are positioned beneath the bottom 13, each containing at least one joining group between the shoulder and the bottom and a leveling group with respect to a floor P. These front and rear bodies 14 and 15 can be feet or more simply, containment elements of the joining group alone.

The example of figure 4 shows how the front body 14 appears in the form of a foot, containing a front joining group 35 and a front leveling group 36, but identically in the rear body 15, also in the form of a foot, there is also a rear joining group 37 together with a rear leveling group 38.

In the example shown, the front body 14 provides in the upper part, a pair of seats 16 suitable for receiving two hooking extensions 17 of the device 11 of the present invention. Said hooking extensions 17 act as a centering device for a correct positioning of the tool guiding device 11 with respect to the various front and rear joining groups and leveling groups present beneath the bottom 13 of the furniture M.

The tool guiding device 11 according to the present invention comprises a parallelepiped body 18 in which guide housings are hollowed for a rod with a tip 19 of a tool, such as, for example, a screwdriver 20, to be used during the assembly and/or adjustment phase of the furniture units M.

In the example illustrated, the body 18 of the device 11 provides four housings A, B, C and D arranged adjacent to each other, but in the case of the presence of the joining group alone, there are only two of the same. Each housing A, B, C and D extends into a channel 21, 22, 23 and 24 hollowed in the upper part of the body 18. The channels 21, 22, 23 and 24 protrude from a rear surface 25 of the body 18 in correspondence with respective openings 26, 27, 28 and 29 and serve as an alignment to openings 30 and 31 formed in the front body 14 by virtue of their selected inclination, for example preferably, but not exclusively, so as to form an angle α with the floor P of around 20/30°. Said angle α can in any case vary from 0° to 40°. The arrangement of the body 18 of the tool guiding device 11 according to the present invention automatically creates an alignment between the tip 19 of the tool 20 and the various front 14 and rear 15 joining and leveling groups.

Figure 4, for example, shows a section in correspondence with the first housing A. In said figure 4, the channel 21 is provided, which terminates in the opening 26 of the rear surface 25. In this way, the rod with the tip 19 of the tool or screwdriver 20 positioned in the housing A reaches the front body 14 for intervening in order to actuate and/or adjust the front leveling group 36.

In order to intervene to actuate and/or adjust the front joining group, the rod with the tip 19 of the tool or screwdriver 20 is positioned in the second housing B of the device 11. And, by subsequently passing through the channel 22 via the opening 27, the front joining group 35 is reached, between the bottom 13 and the shoulder 12 provided in the front body 14.

The presence of the tool guiding device 11, however, also allows intervention on the leveling groups 38 and joining groups 37 of the rear body 15 positioned beneath the bottom 13.

This is effected analogously to what is described for the front body 14.

The rod with the tip 19 of the tool or screwdriver 20 is, in fact, positioned in the third housing C where the channel 23 which terminates in the opening 28 of the rear surface 25, is provided.

An end of a transmission rod 34 is housed in the front body 14, which extends as far as a corresponding opening 32 formed in front of the rear body 15 at the rear leveling group 38.

In this way, by acting with the tip 19 of the screwdriver 20 on the transmission rod 34, it is possible to operate on the rear leveling group 38.

Almost analogously, an end of a similar transmission rod 34 is housed in the front body 14, which extends as far as a corresponding opening 33 formed in front of the rear body 15 at the rear joining group 37.

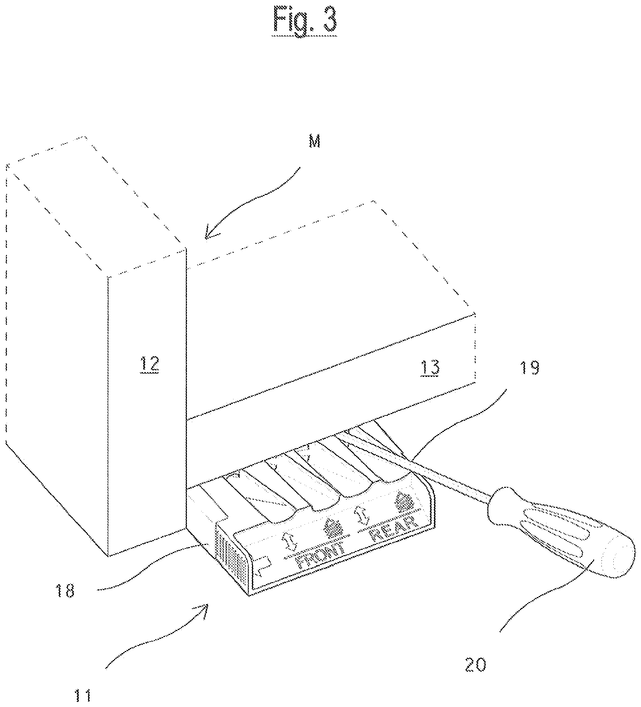

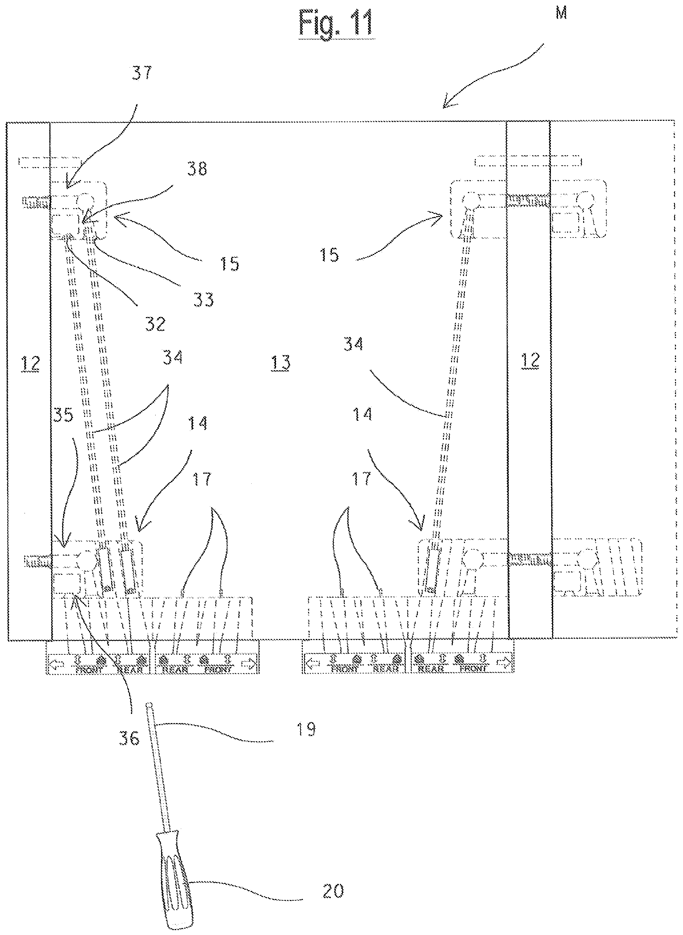

Analogously, if the assembler wishes to intervene in order to actuate and/or adjust the rear joining group, he would position the rod with the tip 19 of the tool or screwdriver 20 in the fourth housing D of the device 11 (figures 3 and 11). By thus acting on the relative transmission rod 34, the rear joining group 37 provided in the rear body 15 is reached.

These four actions are carried out without any need for verifying the exact position of the screwdriver 20 and relative holes for the actuation of the leveling and/or joining groups thanks to the use of the tool guiding device 11.

This is the case for both the left and right arrangement of the front 14 and rear 15 bodies of the furniture.

It can thus be seen how the solution proposed by the use according to the present invention basically solves the problems present in the known state of the art.

The tool guiding device 11, in fact, facilitates the operator who has to effect the assembly of the piece of furniture. It has in fact been seen that it is not necessary to identify the manoeuvring point of the front junction, or the manoeuvring point of the rear junction, or the manoeuvring point of the front leveler, or the manoeuvring point of the rear leveling.

In addition to this, however, in general it also solves a further problem present in the known art.

The above-mentioned automaticity of direction and centering of the tool towards the various leveling and joining groups facilitates the tightening of the junctions and the actuation of the leveling devices when the space between the bottom and the floor is also extremely reduced.

For furniture that provides both right and left joining and/or leveling groups, two tool guiding devices are naturally provided, one right and one left, or a single device to be used for both the right and the left depending on its positioning (figure 11).

Figure 11 shows how the parallelepiped body 18 of the device provides two pairs of four guiding housings (A, B, C and D) for a rod with a tip 19 of a tool 20, the first four housings facing left and the second four housings facing right and/or viceversa. In this way, the housings are tilted towards the relative shoulder to which the front body 14 and/or the rear body 15 is juxtaposed.

Figure 11 also shows how, in the case of a double device, rear hooking extensions 17 are provided in such a number as to allow engagement with right and left front bodies 14.

The objectives mentioned in the preamble of the description have thus been achieved.

The protection scope of the present invention is defined by the enclosed claims.

## Claims

1. Use of a tool guiding device in the assembly and adjustment step of furniture or furnishing items that provide at least one shoulder (12) and a bottom (13), wherein front bodies (14) and rear bodies (15) each containing at least one joining group (35,37) between said shoulder (12) and said bottom (13), are positioned beneath the bottom (13), wherein said device comprises a parallelepiped body (18) in which at least two housings (A, B, C and D) are formed for guiding a rod with a tip (19) of a tool (20), a channel (21, 22, 23 and 24) extends in each of said at least two housings (A, B, C and D), hollowed in the upper part of the body (18), which protrudes from a rear surface (25) of the body (18) in correspondence with respective openings (26, 27, 28 and 29) positionable towards said front bodies (14) and rear bodies (15) containing said at least one joining group, at least one transmission rod (34) being provided between said front body (14) and said at least one joining group (37) of said rear body (15).

2. Use of a tool guiding device according to claim 1, **characterized in that** said parallelepiped body (18) provides four housings (A, B, C and D) for guiding a rod with a tip (19) of a tool (20), a respective channel (21, 22, 23 and 24) hollowed in the upper part of the body (18), extends in each of said at least two housings (A, B, C and D), that can be used for directing said rod with a tip (19) of a tool (20) towards a respective joining group and levelling group positioned in front bodies (14) and rear bodies (15) which are in the form of feet, a transmission rod (34) being provided between said front body (14) and said levelling group of said rear body (15).

3. Use of a tool guiding device according to claim 1 or 2, **characterized in that** said parallelepiped body (18) provides rear hooking extensions (17) to said front bodies (14).

4. Use of a tool guiding device according to claim 1 or 2, **characterized in that** each channel (21, 22, 23 and 24) hollowed in the upper part of the body (18) has a selected inclination so as to be aligned with a selected joining and/or levelling group.

5. Use of a tool guiding device according to claim 1 or 2, **characterized in that** said parallelepiped body (18) provides two pairs of four housings (A, B, C and D) for guiding a rod with a tip (19) of a tool (20), the first four housings facing left and the second four housings facing right and/or viceversa.

6. Use of a tool guiding device according to one or more of the previous claims, **characterized in that** said parallelepiped body (18) of said housings is tilted towards the relative shoulder to which the front body (14) and/or the rear body (15) is juxtaposed.

7. Use of a tool guiding device according to claim 4, **characterized in that** said inclination is such as to form an angle (α) with said floor (P), preferably of around 20/30°.

## Patentansprüche

1. Verwendung einer Werkzeugführungsvorrichtung beim Montage- und Einstellschritt von Möbeln oder Einrichtungsgegenständen, die mindestens eine Schulter (12) und einen Boden (13) aufweisen, wobei vordere Körper (14) und rückwärtige Körper (15), die jeweils mindestens eine Verbindungsgruppe (35, 37) zwischen der Schulter (12) und dem Boden (13) enthalten, unterhalb des Bodens (13) angeordnet sind,
wobei die Vorrichtung einen parallelepipedförmigen Körper (18) umfasst, in dem mindestens zwei Gehäuse (A, B, C und D) zum Führen einer Stange mit einer Spitze (19) eines Werkzeugs (20) ausgebildet sind, wobei sich in jedem der mindestens zwei Gehäuse (A, B, C und D) ein Kanal (21, 22, 23 und 24) erstreckt, der im oberen Teil des Körpers (18) hohlförmig ist und von einer rückwärtigen Fläche (25) des Körpers (18) in Übereinstimmung mit jeweiligen Öffnungen (26, 27, 28 und 29) vorsteht, die in Richtung der vorderen Körper (14) und rückwärtigen Körper (15), die die mindestens eine Verbindungsgruppe enthalten, positionierbar sind, wobei mindestens eine Übertragungsstange (34) zwischen dem vorderen Körper (14) und der mindestens einen Verbindungsgruppe (37) des rückwärtigen Körpers (15) vorgesehen ist.

2. Verwendung einer Werkzeugführungsvorrichtung nach Anspruch 1,
**dadurch gekennzeichnet, dass** der parallelepipedförmige Körper (18) vier Gehäuse (A, B, C und D) zum Führen einer Stange mit einer Spitze (19) eines Werkzeugs (20) aufweist, wobei sich ein entsprechender Kanal (21, 22, 23 und 24), der im oberen Teil des Körpers (18) hohlförmig ist, in jedem der mindestens zwei Gehäuse (A, B, C und D) erstreckt, der verwendet werden kann, um die Stange mit einer Spitze (19) eines Werkzeugs (20) zu einer entsprechenden Verbindungsgruppe und Nivelliergruppe zu führen, die in vorderen Körpern (14) und rückwärtigen Körpern (15) angeordnet sind, die die Form von Füßen haben, wobei eine Übertragungsstange (34) zwischen dem vorderen Körper (14) und der Nivellierungsgruppe des rückwärtigen Körpers (15) vorgesehen ist.

3. Verwendung einer Werkzeugführungsvorrichtung nach einem der Ansprüche 1 oder 2,
**dadurch gekennzeichnet, dass** der parallelepipedförmige Körper (18) rückwärtige Hakenverlängerungen (17) für die vorderen Körper (14) aufweist.

4. Verwendung einer Werkzeugführungsvorrichtung nach einem der Ansprüche 1 oder 2,
**dadurch gekennzeichnet, dass** jeder im oberen Teil des Körpers (18) hohlförmige Kanal (21, 22, 23 und 24) eine ausgewählte Neigung aufweist, um mit einer ausgewählten Verbindungs- und/oder Nivellierungsgruppe ausgerichtet zu werden.

5. Verwendung einer Werkzeugführungsvorrichtung nach einem der Ansprüche 1 oder 2,
**dadurch gekennzeichnet, dass** der parallelepipedförmige Körper (18) zwei Paare von vier Gehäusen (A, B, C und D) zur Führung einer Stange mit einer Spitze (19) eines Werkzeugs (20) aufweist, wobei die ersten vier Gehäuse nach links weisen und die zweiten vier Gehäuse nach rechts weisen und/oder umgekehrt.

6. Verwendung einer Werkzeugführungsvorrichtung nach einem oder mehreren der vorhergehenden Ansprüche, **dadurch gekennzeichnet, dass** der parallelepipedförmige Körper (18) der Gehäuse in Richtung der relativen Schulter geneigt ist, neben der der vordere Körper (14) und/oder der rückwärtige Körper (15) liegt.

7. Verwendung einer Werkzeugführungsvorrichtung nach Anspruch 4, **dadurch gekennzeichnet, dass** die Neigung so beschaffen ist, dass sie einen Winkel (α) mit dem Boden (P) bildet, der vorzugsweise etwa 20/30° beträgt.

## Revendications

1. Utilisation d'un dispositif de guidage d'outil dans l'étape d'assemblage et de réglage de meubles ou d'articles d'ameublement qui fournissent au moins un épaulement (12) et un fond (13), des corps avant (14) et des corps arrière (15) contenant chacun au moins un groupe de jonction (35, 37) entre ledit épaulement (12) et ledit fond (13), étant positionnés sous le fond (13), ledit dispositif comprenant un corps parallélépipédique (18) dans lequel au moins deux logements (A, B, C et D) sont formés pour guider une tige avec une pointe (19) d'un outil (20), un canal (21, 22, 23 et 24) s'étendant dans chacun desdits au moins deux logements (A, B, C et D), creusé dans la partie supérieure du corps (18), qui fait saillie à partir d'une surface arrière (25) du corps (18) en correspondance avec des ouvertures respectives (26, 27, 28 et 29) pouvant être positionnées vers lesdits corps avant (14) et lesdits corps arrière (15) contenant ledit au moins un groupe de jonction, au moins une tige de transmission (34) étant prévue entre ledit corps avant (14) et ledit au moins un groupe de jonction (37) dudit corps arrière (15).

2. Utilisation d'un dispositif de guidage d'outil selon la revendication 1, **caractérisé en ce que** ledit corps parallélépipédique (18) fournit quatre logements (A, B, C et D) pour le guidage d'une tige avec une pointe (19) d'un outil (20), un canal respectif (21, 22, 23 et 24) creusé dans la partie supérieure du corps (18), s'étendant dans chacun desdits au moins deux logements (A, B, C et D), qui peuvent être utilisés pour diriger ladite tige avec une pointe (19) d'un outil (20) vers un groupe de jonction et un groupe de mise à niveau respectifs positionnés dans des corps avant (14) et des corps arrière (15) qui sont en forme de pieds, une tige de transmission (34) étant prévue entre ledit corps avant (14) et ledit groupe de mise à niveau dudit corps arrière (15).

3. Utilisation d'un dispositif de guidage d'outil selon la revendication 1 ou 2, **caractérisée en ce que** ledit corps parallélépipédique (18) fournit des prolongements d'accrochage arrière (17) auxdits corps avant (14).

4. Utilisation d'un dispositif de guidage d'outil selon la revendication 1 ou 2, **caractérisée en ce que** chaque canal (21, 22, 23 et 24) creusé dans la partie supérieure du corps (18) présente une inclinaison choisie de façon à être aligné avec un groupe de jonction et/ou de mise à niveau choisi.

5. Utilisation d'un dispositif de guidage d'outil selon la revendication 1 ou 2, **caractérisée en ce que** ledit corps parallélépipédique (18) fournit deux paires de quatre logements (A, B, C et D) pour le guidage d'une tige avec une pointe (19) d'un outil (20), les quatre premiers logements étant orientés vers la gauche et les quatre seconds logements étant orientés vers la droite et/ou inversement.

6. Utilisation d'un dispositif de guidage d'outil selon une ou plusieurs des revendications précédentes, **caractérisé en ce que** ledit corps parallélépipédique (18) desdits logements est incliné vers l'épaulement relatif auquel le corps avant (14) et/ou le corps arrière (15) sont juxtaposés.

7. Utilisation d'un dispositif de guidage d'outil selon la revendication 4, **caractérisé en ce que** ladite inclinaison est telle qu'elle forme un angle (α) avec ledit sol (P), de préférence d'environ 20/30°.
